# EUROPEAN PATENT SPECIFICATION

(11) **EP 2 807 027 B1**
(45) Date of publication and mention of the grant of the patent: **10.04.2024**
(21) Application number: 13702093.9
(22) Date of filing: 22.01.2013
(51) Int. Cl.: B32B 27/06, B32B 27/30, B32B 3/04

(54) **LARGE FORMAT POLYSTYRENE PANEL**
GROSSFORMATIGE POLYSTYROLPLATTE
PANNEAU POLYSTYRÈNE GRAND FORMAT

(30) Priority: 23.01.2012 GB 201201039
(43) Date of publication of application: 03.12.2014
(73) Proprietor: Upcycle Holdings Limited, Dublin 4 (IE)
(72) Inventor: STILLWELL, Nicholas, Trowbridge Wiltshire BA14 9LH (GB)
(74) Representative: Boult Wade Tennant LLP
(86) International application number: PCT/GB2013/050134
(87) International publication number: WO 2013/110930

(56) References cited:
- GB-A- 1 408 592
- GB-A- 1 585 554
- US-A1- 2007 128 428

## Description

The present invention relates to a method for making a moulded panel or board formed from polystyrene (PS) or high impact polystyrene (HIPS) with a solid, continuous outer skin and a cellular core structure. In particular, it relates to such a panel which is a large format, that is with a largest face of over 1 m² in area, and over 11 mm (and preferably over 14mm) in thickness.

Current furniture making methods have moved away from solid wood to using composite materials such as MDF, chipboard and glass fibre, with coatings such as melamine or veneer to create a desired surface finish or colour.

Fibreboard and oriented strand board are commonly used in furniture and interior design. However, they are not resistant to moisture and therefore need to be painted or laminated as a secondary process to achieve an acceptable surface finish. This may include adding veneers or melamine coatings. This type of board therefore uses adhesives in its production, in both primary and secondary processes, and they are very difficult to recycle once laminated.

Therefore, this type of board is limited to interior use in its primary form as it is not weatherproof.

Polystyrene and high impact polystyrene are known materials which are generally used in small, thin walled products such as coat hangers and yoghurt pots. The material is extruded as thin sheets which can then by thermoformed into a desired shape. It is possible using current extrusion technology to produce a solid polystyrene sheet of up to approximately 6mm in thickness. However, such solid sheets of PS or HIPS are very brittle and have poor impact resistance. It is not possible using current technology to extrude a large format board of PS or HIPS which is over 11 mm in thickness. Even if it were possible to produce, a board made of solid PS/HIPS in a format of 2440 x 1220 mm (a typical industry standard size), with a thickness of say 19 mm (a typical desirable thickness in many applications in furniture and interior design) it would weigh approximately 55 kg, which is very heavy and therefore unsuitable for furniture and interior design applications.

Furthermore, PS/HIPS is a major polluter since little is currently recycled and discarded PS/HIPS does not biodegrade for hundreds of years and is resistant to photolysis. Since degradation of materials creates potentially harmful liquid and gaseous by-products that could contaminate groundwater and air, today's landfill sites are designed to minimise contact with air and water. However, air and water are necessary for degradation and therefore landfill design practically eliminates the degradation of waste.

Thus, current fibreboard products are difficult to recycle, require adhesives, secondary processes, suffer under moisture and have some health hazards associated with their processing. Hardwoods are very expensive, may have an environmental impact, and require various treatments before use. Solid plastic boards of over about 11 mm in thickness become very heavy, may still bend, and are expensive. Boards over 11 mm in thickness formed of PS or HIPS simply do not exist in the market at the current time.

GB1585554 A discloses a moulded plastic article for use in the manufacture of furniture, comprising a continuous enveloping plastic skin forming the exterior of the article and a hollow centre which is filled with foamed plastic material by injection. The skin is made from a variety of polymer resins, namely polystyrene, general purpose or high impact.

The present invention provides a process for making a moulded panel for use in furniture and interior design applications as set out in claim 1.

Preferably, the total thickness of the panel is greater than 11 mm.

Preferably, the outer skin comprises recycled PS or recycled HIPS. The core may also include reinforcement members.

The skin may be moulded to provide a surface texture and/or to incorporate a high temperature printed film.

The panel may incorporate at least one of anti-fungal agents, anti-bacterial agents and fire retardant agents to suit a given application.

The panel skin is preferably formed from a plastic particulate material applied directly to the surface of a heated mould.

The invention will now be described in detail, by way of example only, with reference to the accompanying drawings in which:
Figure 1 is a perspective view of a panel in accordance with the present invention;
Figure 2 is a cross-section of the panel of Figure 1 along the line 2-2;
Figure 3 is a perspective view of a second embodiment of the present invention formed with a non-slip surface;
Figure 4 is a perspective view of the third embodiment of the present invention formed with surface graphics; and
Figure 5 is a cross-sectional view of the panel of Figure 4 along the line 5-5.

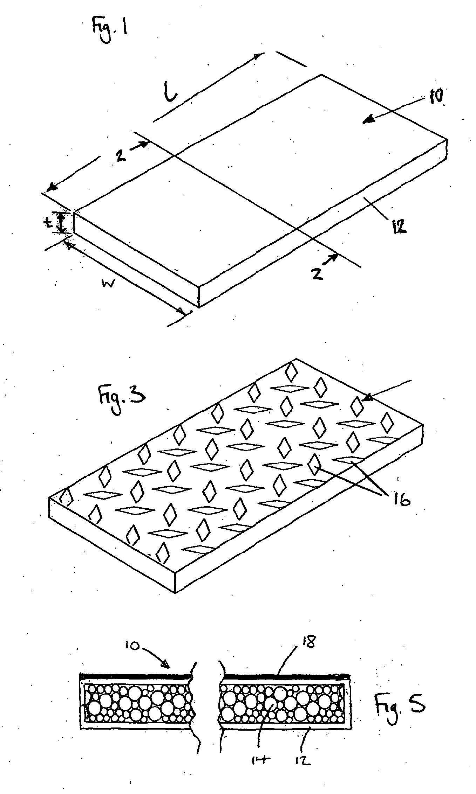

Figure 1 illustrates a panel 10 in accordance with the present invention formed of PS or HIPS and with as length l, width w and thickness t. Typically, the length may be 2440 mm and width 1220 mm which is a typically industry standard size. In the present invention, the thickness is 11 mm or greater, and preferably over 14mm.

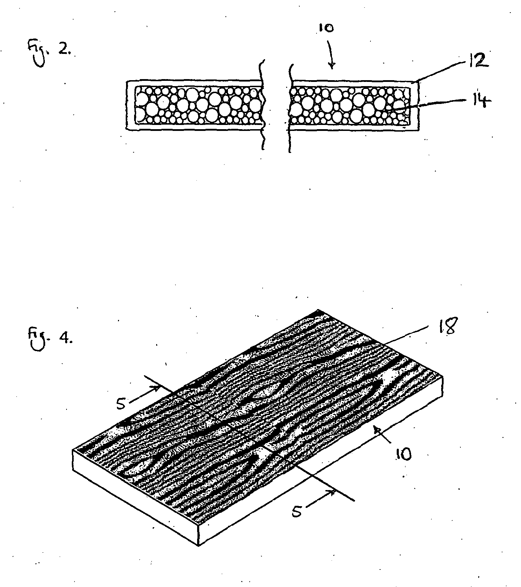

The panel 10 comprises a continuous, solid outer skin 12 which extends over its entire surface with no openings, vent holes, injection cavities etc. As shown in Figure 2, the skin 12 completely encloses a cellular core 14 which is very strong yet has a lower density and therefore reduced weight for a given volume as compared with the solid skin 12. The cellular core is formed from a heat-activated foamable plastic particulate material.

The panel 10 may be produced using a process such as that described in GB 2460838. Here, two heated, open female moulds are provided. Plastic particulate material is placed in both moulds and melts to form a skin lining each mould. An expandable filler material also in particulate form is added to one mould and the two moulds are brought together to form a closed mould cavity. Under the action of heat, the two skins bond together to create a single continuous skin which completely encapsulates the filler material, which expands to form the cellular core, filling the available volume within the continuous skin.

Alternatively, the panel 10 may be produced using a moulding machine as described in WO2011/114119. This uses a single heated female mould and a non complementary heated lid which may be brought together to form a mould cavity. As above, when the mould and lid are apart, plastic particulate material may be placed in contact with both in order to melt and form the plastic skin. Heat activated foamable plastic particulate filler material is placed in the female mould which is closed by the lid, to create a continuous skin completely encapsulating the filler. Heat from the moulds activates the filler to expand and fill the skin.

Thus, the panel 10 is preferably produced by a static mould process in which the mould remains in one place, rather than a process such as extrusion or rotomoulding or one requiring a mould to be moved by conveyers into an oven etc.

GB 2460838 describes the use of polyethylene (PE). This shrinks during production allowing easy removal of the finished product from the mould. PS and HIPS were previously considered unsuitable for this method because they undergo considerably less shrinkage. However, as there is less shrinkage, PS/HIPS panels can be formed to precise dimensions, for example for use as concrete formwork in place of plywood.

The skin 12 may be formed of virgin or recycled PS or HIPS, which is introduced into the mould in particulate form. The core 14 comprises mixed plastic waste, which may include PS or HIPS, which is also introduced into the mould in particulate form.

The continuous outer skin 12 is moisture proof, scratch resistant and stiff and is supported by the strong but lightweight cellular core 14.

The panel 10 can be formed to a desired shape and size depending on the moulds used. Therefore, while a rectangular panel is illustrated other shapes are possible. The panel 10 may also be cut, formed and fabricated by conventional methods to create different end products.

Colour may be added to the PS/HIPS skin 12 during manufacture to produce a panel 10 with a desired end-use colour. Therefore, painting or laminating are not required.

In a smooth mould, a very smooth outer surface of the skin 12 can be achieved. However, a textured or decorated surface can also be formed on the exterior of the panel 10. The walls of the moulds used may be textured to impart a given texture to the skin 12. For example, as in Figure 3, a checker plate pattern of raised projections and/or depressions 16 can be moulded directly into the skin 12 to provide a non-slip surface on at least one face of the panel 10.

Surface decoration can also be provided by placing a high temperature printed film 18 in one or both moulds before forming the panel 10. For example, as shown in Figures 4 and 5 a wood grain effect can be provided on at least one face by a film 18 which bonds to the skin 12 during the moulding process. Therefore, veneers or laminates are not required.

The skin 12 and core 14 of the panel 10 may also incorporate materials and agents to improve the performance for particular customer applications. For example, fire retardants, anti-fungal agents or anti-bacterial agents and so on may be added.

Reinforcing members, such as a steel mesh, may be embedded within the core 14 during production to add strength and stiffness to the panel 10.

The thickness of the skin 12 of the panel 10 can be adjusted to suit the application. A thin skin 12 will give a lighter panel 10, whereas a thicker skin 12 will increase weight, strength and stiffness.

Thus, a panel in accordance with the present invention provides an environmentally friendly alternative to MDF, plywood, fibreboard and chipboard. The panel can be produced from waste materials and recycled again into another panel of the same type at the end of its life. In particular it comprises PS and HIPS which are seldom recycled at present. The panel also has improved performance in relation to the known alternative materials since it is moisture proof, scratch resistant, and strong yet lightweight. Different surface finishes can be incorporated at the primary production stage so that secondary processes are unnecessary.

## Claims

1. A process for making a moulded panel (10) for use in furniture and interior design applications, the panel (10) comprising an outer skin (12) formed of polystyrene or high impact polystyrene encapsulating a cellular plastic core (14) formed from a heat activated foamable plastic particulate material, and wherein the area of the largest face of the panel is greater than 1 m²; **characterised in that** the core (14) comprises mixed waste plastic and the process comprises introducing the mixed waste plastic into the mould in particulate form, and forming the outer skin (12) as a continuous, solid skin which extends over the entire surface of the panel with no openings, vent holes or injection cavities so that the core (14) is completely encapsulated.

2. A process for making a panel (10) as claimed in claim 1, wherein the total thickness of the panel (10) is greater than 11 mm.

3. A process for making a panel (10) as claimed in any preceding claim, wherein the continuous outer skin (12) is formed of recycled polystyrene or recycled high impact polystyrene.

4. A process for making a panel (10) as claimed in any preceding claim, wherein the core (14) includes reinforcement members.

5. A process for making a panel (10) as claimed in any preceding claim, wherein the skin (12) is moulded to provide a surface texture.

6. A process for making a panel (10) as claimed in any preceding claim, wherein the skin (12) incorporates a high temperature printed film (18).

7. A process for making a panel (10) as claimed in any preceding claim, incorporating at least one of anti-fungal agents, anti-bacterial agents and fire retardant agents.

8. A process for making a panel (10) as claimed in any preceding claim, wherein the skin (12) is formed from a plastic particulate material applied directly to the surface of a heated mould.

## Patentansprüche

1. Verfahren zur Herstellung einer geformten Platte (10) zur Verwendung in Möbeln und Innenraumgestaltungsanwendungen, wobei die Platte (10) eine Außenhaut (12) umfasst, die aus Polystyrol oder hochschlagfestem Polystyrol gebildet ist und einen zellulären Kunststoffkern (14) einkapselt, der aus einem wärmeaktivierten schäumbaren, teilchenförmigen Kunststoffmaterial gebildet ist, und wobei die Fläche der größten Seite der Platte größer als 1 m² ist; **dadurch gekennzeichnet, dass** der Kern (14) gemischten Abfallkunststoff umfasst und das Verfahren das Einbringen des gemischten Abfallkunststoffs in die Form in Teilchenform und das Ausbilden der Außenhaut (12) als eine durchgehende, feste Haut umfasst, die sich über die gesamte Oberfläche der Platte ohne Öffnungen, Entlüftungslöcher oder Infektionshohlräume erstreckt, so dass der Kern (14) vollständig eingekapselt ist.

2. Verfahren zur Herstellung einer Platte (10) wie in Anspruch 1 beansprucht, wobei die Gesamtdicke der Platte (10) mehr als 11 mm beträgt.

3. Verfahren zur Herstellung einer Platte (10) wie in einem der vorhergehenden Ansprüche beansprucht, wobei die durchgehende Außenhaut (12) aus recyceltem Polystyrol oder recyceltem hochschlagfestem Polystyrol gebildet wird.

4. Verfahren zur Herstellung einer Platte (10) wie in einem der vorhergehenden Ansprüche beansprucht, wobei der Kern (14) Verstärkungselemente enthält.

5. Verfahren zur Herstellung einer Platte (10) wie in einem der vorhergehenden Ansprüche beansprucht, wobei die Haut (12) so geformt wird, dass sie eine Oberflächenstruktur aufweist.

6. Verfahren zur Herstellung einer Platte (10) wie in einem der vorhergehenden Ansprüche beansprucht, wobei die Haut (12) eine bei hoher Temperatur bedruckte Folie (18) enthält.

7. Verfahren zur Herstellung einer Platte (10) wie in einem der vorhergehenden Ansprüche beansprucht, bei dem mindestens eines der folgenden Mittel eingesetzt wird: Antipilzmittel, antibakterielle Mittel und feuerhemmende Mittel.

8. Verfahren zur Herstellung einer Platte (10) wie in einem der vorhergehenden Ansprüche beansprucht, wobei die Haut (12) aus einem teilchenförmigen Kunststoffmaterial gebildet wird, das direkt auf die Oberfläche einer erhitzten Form aufgebracht wird.

## Revendications

1. Procédé de fabrication d'un panneau moulé (10) destiné à être utilisé dans des applications de mobilier et d'aménagement intérieur, le panneau (10) comprenant une peau extérieure (12) formée de polystyrène ou de polystyrène à haute résistance aux chocs encapsulant un noyau en plastique cellulaire (14) formé à partir d'un matériau particulaire plastique expansible activé thermiquement, et dans lequel la surface de la plus grande face du panneau est supérieure à 1 m² ; **caractérisé en ce que** le noyau (14) comprend des déchets de plastique mélangés et le procédé comprend l'introduction des déchets de plastique mélangés dans le moule sous une forme particulaire, et la formation de la peau extérieure (12) sous la forme d'une peau continue et solide qui s'étend sur toute la surface du panneau sans ouverture, trou d'aération ni cavité d'injection, de sorte que le noyau (14) est complètement encapsulé.

2. Procédé de fabrication d'un panneau (10) selon la revendication 1, dans lequel l'épaisseur totale du panneau (10) est supérieure à 11 mm.

3. Procédé de fabrication d'un panneau (10) selon l'une quelconque des revendications précédentes, dans lequel la peau extérieure continue (12) est formée de polystyrène recyclé ou de polystyrène à haute résistance aux chocs recyclé.

4. Procédé de fabrication d'un panneau (10) selon l'une quelconque des revendications précédentes, dans lequel le noyau (14) inclut des éléments de renforcement.

5. Procédé de fabrication d'un panneau (10) selon l'une quelconque des revendications précédentes, dans lequel la peau (12) est moulée pour fournir une texture de surface.

6. Procédé de fabrication d'un panneau (10) selon l'une quelconque des revendications précédentes, dans lequel la peau (12) incorpore un film imprimé à haute température (18).

7. Procédé de fabrication d'un panneau (10) selon l'une quelconque des revendications précédentes, incorporant au moins certains parmi des agents antifongiques, des agents antibactériens et des agents ignifuges.

8. Procédé de fabrication d'un panneau (10) selon l'une quelconque des revendications précédentes, dans lequel l'enveloppe (12) est formée à partir d'un matériau particulaire plastique appliqué directement à la surface d'un moule chauffé.
